# EUROPEAN PATENT SPECIFICATION

(11) **EP 0 561 746 B1**
(45) Date of publication and mention of the grant of the patent: **18.06.1997**
(21) Application number: 93830074.6
(22) Date of filing: 24.02.1993
(51) Int. Cl.: C04B 18/04, C04B 28/22, B09B 3/00

(54) **Process for stabilizing and solidifying wastes from aluminum processing by means of an inorganic matrix**
Verfahren zum Stabilisieren und Verfestigen von Abfällen aus der Aluminiumverarbeitung mittels einer anorganischen Matrix
Procédé pour stabiliser et solidifier des déchets provenant de traitement d'aluminium au moyen d'une matrice inorganique

(30) Priority: 26.02.1992 IT RM920127
(43) Date of publication of application: 22.09.1993
(73) Proprietor: ENEA ENTE PER LE NUOVE TECNOLOGIE, L'ENERGIA E L'AMBIENTE, I-00198 Roma (IT); ECOSERDIANA S.p.A., I-09121 Cagliari (IT)
(72) Inventor: Balzamo, Stefania, c/o Enea - C.R.E. Casaccia, I-00060 Rome (IT); de Angelis, Giorgio, c/o Enea - C.R.E. Casaccia, I-00060 Rome (IT); De Poli,Fabrizio, c/o ENEA-C.R.E. Casaccia, I-00060 Rome (IT); Marchetti, Antonia, c/o Enea - C.R.E. Casaccia, I-00060 Rome (IT); Vargiu, Luciano, I-09121 Cagliari (IT)
(74) Representative: Banchetti, Marina

(56) References cited:
- EP-A- 0 038 235
- EP-A- 0 408 545
- DE-A- 3 633 413
- US-A- 4 028 130
- US-A- 4 762 623
- PATENT ABSTRACTS OF JAPAN vol. 011, no. 069 (C-407)3 March 1987 & JP-A-61 227 899 (TOSHIHIRO IJICHI) 9 October 1986

## Description

The present invention relates to a process for stabilizing and solidifying wastes from aluminum processing by means of an inorganic matrix. More particularly, this invention relates to a method of processing solid wastes containing, inter alia, metals and ammonia, by incorporating said wastes into an inert solid matrix, in order to obtain a product which may be disposed of in a waste storage area of the same type as those currently employed for urban waste disposal.

It is well known that conditioning of toxic or harmful wastes can be carried out by means of solidifying/stabilizing processes.

The term "solidification/stabilization" ("S/S") was defined by a document of the Environmental Protection Agency (E.P.A.) (P. G. Malone, L. W. Jones and R. S. Larson, "Guide to Disposal of Chemically Stabilized and Solidified Waste", SW-872, Office of Water Management, U.S. E.P.A, Washington, D.C., September 1982) as a series of treatments which facilitate the handling of toxic and harmful products, by improving their physical properties and, at the same time, lowering their ability to release pollutants to the environment. The term "solidification" implies the production of a monolithic block, while the term "stabilization" refers to lowering the pollutants solubility by means of chemical and/or physical modifications.

The known solidifying/stabilizing processes using inorganic matrices generally comprise the following sequence of steps:
1) waste sorting, in order to select wastes suitable to undergo a given treatment and to be incorporated into a given matrix;
2) preliminary waste treatment, by which the selected waste is subjected to physical operations such as sieving, thickening, mechanical dewatering, and/or to chemical treatments such as oxidation, neutralization, etc.;
3) mixing the waste with the selected matrix either in batch or in continuous reactors, followed by solidification.

Examples of solidifying/stabilizing processes applicable to incorporate liquid waste materials into a solid matrix, by mixing said waste materials with common binders and, optionally, with common fillers, are disclosed in EP-A-38 235 and in EP-A-408 545. Further examples of such processes, particularly suited to treat wastes in the form of slurries, are disclosed in DE-A-3 633 413. The latter document also refers to waste materials in the form of powders as the possible starting materials.

In most cases the inorganic matrix comprises cement as the hydraulic binder, along with one or more agents capable of enhancing the entrapment of the pollutant in the matrix by chemical mechanisms. Most of the known processes for treating inorganic pollutants, in particular heavy metals, use silicate solutions as chemical entrapping agents. Said agents form insoluble silicates with the metal cations, thus stabilizing the pollutants into the cement matrix.

The above processes are generally too much expensive, as they require large amounts of cement. Secondly, said processes could be negatively affected by incompatibility phenomena between the waste and the material employed as the matrix. In particular, the treatments using silicate-based additives produce not perfectly homogeneous materials, whose mechanical properties are not exactly reproducible.

A stabilizing/solidifying process which has been proposed to overcome the above problems, and which is particularly suitable for treating toxic and harmful wastes containing heavy metals in the presence of other pollutants of an organic nature, is described in the Italian patent application no. 48028 A/90. In said process cement is mixed with bentonite and inert materials, and a fluidifyer/quick setting promoter is added. Bentonite is used to entrap the pollutants by means of a double mechanism of adsorption and ion exchange, while the use of the fluidifyer/quick setting promoter allows to limit the viscosity increase due to the bentonite addition, and to decrease the water/cement ratio, thus reducing the porosity of the final product.

The problem of solid waste disposal recently extended to the new field of wastes resulting from aluminum processing, which were previously considered as inert wastes, and not as toxic or harmful materials.

The aluminum casting processes produce two types of waste, i.e. primary and secondary casting wastes, whose characteristics differ to some extent.

In the primary casting process, aluminum produced by electrolysis is melt for being refined, thereby producing ingots, billets, plates and "T" section bars of alloyed or unalloyed aluminum. The process involves a first melting in a tilting muffle furnace, wherein neither slagging nor alloying materials are added, and the separation of the coarsest slags takes place. Then the product is subjected to a second melting process in a similar but smaller furnace, in which degassing agents and alloying elements (comprising essentially manganese, silicon and copper) are added, as well as gaseous nitrogen.

At the end of this process, besides the refined metal, slags are obtained which still contain about 25% of aluminum. Said slags are crushed in a mill and the remaining aluminum is mechanically separated therefrom, leaving a fine powder. The latter is the waste to be eliminated.

The secondary aluminum casting process is very important for environmental protection, as it allows to recover the wastes from primary and secondary casting, as well as aluminum scraps obtained by separate waste collection.

Sea salt and metal copper, in form of wire scraps and miscellaneous wastes, are added to the secondary casting feed; then, depending upon the desired end product, other alloying elements, such as manganese and silicon, are added. The furnace is of the rotating type, fed with fuel oil, and the heat necessary to melt the feed is supplied by the flue gas, which is at about 800°C.

The above process produces slags with a residual aluminum contents of about 5%; said slags, like the slags from the primary casting, are supplied to the crushing mill in order to recover the remaining amounts of metal, leaving a further waste. The latter differs from the primary casting waste in that as it has a larger granule size and a darker colour.

All of the foregoing wastes could be classified as "special waste" according to the environmental legislation, i.e. as industrial waste whose contents of toxic or harmful substances is so low that the disposal thereof in particularly controlled waste storage areas is not required. Considering the Italian provisions, particularly the Presidential Decree 915/82 (D.P.R. 915/82), the wastes from aluminum processing contain none of the elements or compounds mentioned in the twentynine classes listed therein, at a concentration above the admitted values. Specifically, the concentrations of the various components of the said wastes are within the limits of concentration (C.L.) set out in Table 1.1 of the Order of Interministry Committee of July 27 1984.

In spite of that, at least according to the present Italian provisions, the concerned wastes cannot be disposed of in waste storage areas of class II, type B (that are similar to the waste storage areas of class I. i.e. for solid urban wastes), but must be disposed of in class II, type C areas at very high costs. This is due to the fact that the aluminum-containing wastes, when subjected to the acetic acid release test, carried out in accordance with the E.P.A. standard procedure (that was adopted in Italy under the designation I.R.S.A.-C.N.R. test), produce an eluate with copper contents, and, to a lesser extent, lead contents above the admitted values. Therefore, according to the above provision, the leachate that could be released in effluent waters by the concerned wastes could be harmful both for the environment and for potential users.

In view of their copper and lead contents, therefore, the wastes from aluminum processing can be disposed of in an ordinary controlled waste storage area only if they have been made inert by a suitable treatment. Such a treatment, obviously, must be cost effective, in that its adoption in connection with the disposal in a II B type waste storage area must be cheaper than the disposal of said waste in a II C type area, as required when no treatment is carried out.

In addition to copper and lead, the wastes from aluminum processing contain a remarkable amount of ammonia. The NH₃ gases gradually evolve from the wastes and are readily dissolved in water as soon as they come into contact with it. Although ammonia itself is not a toxic or harmful compound, its release into effluent waters must be carefully controlled in order to avoid its enhancing water eutrophication phenomena.

The only method presently adopted for treating wastes from aluminum processing consists of mixing said wastes with lime before disposal. However, such a solution is not effective, as the laboratory release tests show that a true deactivation of the waste does not occur, in spite of the fact that an eluate within the admitted limits is obtained. The lime addition simply causes a pH increase, which prevents from obtaining the acid conditions which are necessary to put into evidence any leaching during the release test.

Further, the evolution of ammonia and other gases (specially phosphine and small amounts of hydrocarbons, such as methane, butene and acetylene) makes it unadvisable the disposal of such wastes in an ordinary controlled waste storage area.

None of the known stabilizing/solidifying processes is applicable in the specific case of wastes from aluminum processing, essentially because of the problems encountered in working the mixture. The said problems are mainly due to the continuous evolution of gas during the treatment, which gives rise to an emulsion. The latter becomes more remarkable when increasing amounts of water are added.

In addition to the problems occurring in obtaining the mixture, a further drawback of the prior art processes lies in the poor consistency of the final product, partially due to the above mentioned gas evolution, which causes an increased porosity. Accordingly, the solid end products of the prior art show unsatisfactory results both in the acetic acid release test, and in the mechanical tests that are normally carried out in order to check the resistance of the treated solid waste. Obviously, said mechanical tests are carried out under the worst conditions that can be foreseen for a II B type waste disposal area.

Therefore, an object of the present invention is to provide a process for treating the wastes from aluminum processing so as to make them inert, which process is suitable to be carried out on an industrial scale, and is effective in incorporating said wastes into a stabilized end product, so that said wastes comply with the acetic acid release test and have good mechanical properties.

Accordingly, there is proposed to add to an incorporating matrix, made of lime and pozzolan material. a relatively small amount of cement, sufficient to provide the requested stability and strength to the end product within a typical aging period (28 days). Further according to this invention, there is proposed to employ a reduced and well defined amount of water in the mixture, and to associate the mixing operation with a separating and scrubbing operation for the gas evolving from the mixture.

Therefore, this invention specifically provides a process for stabilizing and solidifying wastes from aluminum processing by means of an inorganic matrix, comprising mixing said wastes with water, lime, one or more natural or artificial pozzolan material, and cement in the following weight ratios:

| | |
|---|---|
| water/total solids (excluding waste) | 0.8 - 1.0 |
| pozzolan material/lime | 0.7 - 1.3 |
| cement/lime | 0.6 - 0.8 |
| waste/total mixture | ≤ 0.5 |
| (waste + pozzolan material)/total mixture | ≤ 0.56 |

In accordance with the provisions of the specific field (such as, for instance, the U.S. ASTM C 618-72 standard, or the Italian Ministry Decree of 03.06.68), the term "pozzolan material" stands for any siliceous or siliceous and aluminous material that is able, when in finely divided form and in the presence of moisture, to react at ordinary temperature with calcium hydroxide or lime to form a cementitious compound. Examples of natural pozzolan materials are real pozzolans, pozzolanic tufa and diatomaceous earth, while the most common artificial pozzolan materials are the fly ashes, produced in large amounts upon cooling of melt ash droplets in the power plants fed with powder coal. Fly ash mainly consists of a reactive vitreous phase containing silica and alumina and, obviously, it is a solid waste to be disposed of. Other artificial pozzolan materials could be obtained, e.g., from clays, by calcining them at temperatures comprised within the range of 500-900°C.

The cement to be used in the process according to this invention could be either a portland cement or a portland-pozzolan cement, the latter being, as is known, a mixture of portland cement with a pozzolan material as above defined, and with dihydrate calcium sulphate.

According to the present invention, the wastes to be processed (which may result both from the primary and from the secondary castings, as previously explained) are fed, together with the water required for the mixture, to a mixing reactor, where the prescribed amounts of hydrated lime, pozzolan material and powdered cement are subsequently added.

The gas stream that progressively evolves during the mixing operation is fed to an appropriate scrubbing or purifying system. The latter operation can be carried out by contacting the gas stream with a diluted solution of sulfuric acid in closed cycle, until the solution is saturated with ammonia. Any possible further gases can then be separated by means of activated carbon filters. When operating in a closed cycle system, a slurry will result from the above treatment, essentially containing ammonium sulphate, which slurry will have to be disposed of as special waste. The activated carbon filters, in turn, are to be regenerated or disposed of as special waste.

Alternatively, the gas produced during the mixing operation can be eliminated in a flare using some auxiliary fuel. In this case, on the basis of the processed amounts, the limits set out by the decree of the Italian Environment Ministry of July 12, 1990, ruling the admitted flare emissions, are deemed not to apply.

As it will be more evident in the following, the process according to this invention, thanks to the selection and the careful proportion of the ingredients, and thanks to the simultaneous gas removal, allows to considerably reduce the extent of the emulsion, that normally occurs in the mixture, and that could otherwise cause undesired swelling. The process further allows to control the evolution of potentially harmful gases, and results in a low-volume and compact final solid product.

In the following, and for exemplification purposes only, the typical features of a waste from secondary casting of aluminum are listed. In particular, Table 1 below shows some generic composition features of such a waste, as obtained upon melting said waste with lithium methaborate, followed by leaching with hydrochloric acid. The analysis was carried out using an emission spectrophotometer with plasma source and atomic absorption.

**TABLE 1**

| Component | Percent by weight |
|---|---|
| SiO₂ | 6.5 |
| Al₂O₃ | 71.0 |
| Fe₂O₃ | 1.1 |
| CaO | 3.6 |
| MgO | 3.0 |
| Na₂O | 4.6 |
| K₂O | 1.2 |
| TiO₂ | 0.26 |
| MnO | 0.28 |
| P₂O₅ | 0.025 |
| NH₃ | 2.4 |
| melting loss (1000°C) | 7.8 |

Table 1 shows, inter alia, the relatively high amount of ammonia present in the waste. The latter has to be removed, as previously set forth, before the waste can be disposed of, in order to avoid any undesired contribution to the phenomenon of water eutrophication.

Table 2 below shows, for the same waste as above, the values of the chemical features to which the above mentioned D.P.R. 915/82 (possible prejudice to the environment due to uncontrolled disposal) applies, together with the corresponding limits of concentration as set out therein.

**TABLE 2**

| Element | Titer (mg/l) | Limit of concn.(mg/kg) (D.P.R. 915/82) |
|---|---|---|
| As | < 1 | 100 |
| Be | < 1 | 500 |
| Cd | 2 | 100 |
| Cr (VI) | < 1 | 100 |
| Hg | < 1 | 100 |
| Pb | 700 | 5,000 |
| Cu | 2,600 | 5,000 |
| Se | < 1 | 100 |
| Te | < 1 | 100 |
| Residue at 550°C | 96.2 | |
| Residue at 110°C | 99.4 | |

As it appears from the foregoing Table, none of the components herein at issue is present in the concerned waste in amounts above the allowed peak values, although the lead contents, and, specially, the copper contents are significantly high.

On the other hand, Table 3 below summarizes the results of the acetic acid release test carried out with 0.5 M acetic acid, according to the method E.P.A./I.R.S.A.-C.N.R..

**TABLE 3**

| Element | Titer (mg/l) | Limit of concn.(mg/kg) (D.P.R. 319/76) |
|---|---|---|
| As | < 0.05 | 0.50 |
| Be | < 0.005 | - |
| Cd | < 0.005 | 0.02 |
| Cr (VI) | < 0.005 | 0.20 |
| Hg | < 0.001 | 0.005 |
| Pb | 0.28 | 0.20 |
| Cu | 4.6 | 0.10 |
| Se | < 0.03 | 0.03 |
| Te | < 0.005 | - |

It is evident from the above figures that the release of copper from the tested waste is several times higher than the prescribed limits. Also the release of lead is slightly over the admitted peak values.

Moreover, from a diffractometric analysis of the waste, the copper has been found to be mainly in the form of hydrated copper oxychloride (Cu₂O(OH)₃Cl)). As is typical of most copper compounds, hydrated copper oxychloride has a quite high solubility when it comes into contact with even relatively weak acid solutions.

A solid waste from aluminum processing such as the one previously described was subjected to several tests in order to compare the stabilizing/solidifying process according to the invention with other conventional waste treatment processes, employed for the treatment of other kinds of wastes.

The objects of the experimental work are, in particular, to prepare a mixture which is readily processable; to prevent or, at least, to reduce the emulsion in the mixture; to incorporate a waste volume as high as possible; and, finally, to obtain a stable product showing satisfactory results when subjected to the acetic acid release test, as well as good mechanical properties.

Inorganic matrices, based respectively on portland cement, portland-pozzolan cement, and lime with a pozzolan material, were tested in various compositions, as follows.

### Composition 1

| | |
|---|---|
| Portland 425 cement | 150 g |
| Water | 50 g |
| Fluidifyer | 0.5 ml |
| Waste | 200 g |

### Composition 2

| | |
|---|---|
| Portland-pozzolan 425 cement | 150 g |
| Water | 50 g |
| Fluidifyer | 0.8 ml |
| Waste | 200 g |
| n-octanol | 0.5 ml |

### Composition 3

| | |
|---|---|
| Lime | 40 g |
| Pozzolan material | 50 g |
| Water | 135 g |
| Fluidifyer | 0.5 ml |
| Waste | 200 g |

### Composition 4

| | |
|---|---|
| Lime | 40 g |
| Pozzolan material | 50 g |
| Water | 135 g |
| Waste | 200 g |

### Composition 5

Same as Composition 4, but operating at 70°C, in order to enhance the evolution of the various gases.

### Composition 6

| | |
|---|---|
| Lime | 40 g |
| Pozzolan material | 50 g |
| Water | 120 g |
| Soluble glass (sodium silicate solution) | 50 g |
| Waste | 200 g |

The compositions conaining cement as binder cannot be used for the object of the present invention, substantially because of problems arising in the mixing operation. The water present in the composition enhances the emulsion formation, thus giving as the final product a swollen solidified waste. As the amount of water cannot be excessively lowered, the use of a fluidifying agent becomes imperative, however with poor results. As an alternative, the effect of adding n-octanol, i.e. a conventional anti-foaming agent, has been studied. After an initial decrease, the foam increases while gas evolves from the mixture.

Foaming is equally unavoidable when a matrix comprising lime and pozzolan material is used, albeit the phenomenon is less apparent than in the previous case. In this case a great excess of water has to be added, negatively affecting the properties of the end product. The main problem relates to the consistency of the final product, as the setting and subsequent aging of the mixture may require several weeks, yet without resulting in a final product of satisfactory consistency.

Moreover, all of the products prepared as above are unable to pass the acetic acid release test, and show values of compressive strength lower than 20 kg/cm².

When employing a composition such as the foregoing ones a product complying with all of the concerned requirements can only be obtained if the amount of incorporated waste maintained so low that the stabilizing/solidifying process is no more cost-effective.

By way of comparison, two examples of materials prepared according to the present invention, both showing advantageous properties, are listed below.

### Composition A

| | |
|---|---|
| Lime | 48 g |
| Pozzolan material | 50 g |
| Water | 102 g |
| Portland cement | 30 g |
| Waste | 200 g |

### Composition B

| | |
|---|---|
| Lime | 48 g |
| Fly ash | 34 g |
| Water | 118 g |
| Portland cement | 30 g |
| Waste | 200 g |

Several experimentations were carried out on products such as the ones above. The setting time as measured by means of the Vicat needle is of about 30 minutes, while the temperature profile obtained by dipping an iron-constantan thermocouple in the mixture poured into a 500 ml Dewar showed 104°C as the peak value.

The acetic acid release test with 0.5 M acetic acid has been carried out both on samples made of lime and pozzolan and on samples made of lime and coal ash materials. Some results are shown in Table 4 below.

**TABLE 4**

| Release Test on Samples according to the Invention | | | | |
|---|---|---|---|---|
| Element | Limits (DPR 915/82) (mg/l) | Composition A | | Composition B Crushed (mg/l) |
| | | Crushed (mg/l) | Intact (mg/l) | |
| Cu | 0.1 | < 0.1 | < 0.1 | < 0.1 |
| Al | 1 | 0.1 | traces | 0.2 |
| Pb | 0.2 | 0.11 | traces | 0.02 |
| Cr (VI) | 0.2 | < 0.1 | < 0.1 | < 0.1 |

As previously pointed out, the process according to the present invention shows a number of advantages, that can be summarized, as follows:
1) ability to produce a solidified product, thereby chemically and physically stabilizing the starting waste;
2) drastical reduction of the emulsion, thereby avoiding waste swelling, which results in poor quality of the final product;
3) possibility of disposing of other waste materials, such as fly ash from the coal combustion, together with the waste from aluminum processing;
4) control of the potentially toxic gases evolving from the mixture during the process.

The present invention has been disclosed with specific reference to some preferred embodiments thereof, but it is to be understood that modifications and changes may be brought to it by those who are skilled in the art.

## Claims

1. A process for stabilizing and solidifying wastes from aluminum processing by means of an inorganic matrix, comprising mixing said wastes with water, lime, one or more natural or artificial pozzolan material, and cement in the following weight ratios:
| | |
|---|---|
| water/total solids (excluding waste) | 0.8 - 1.0 |
| pozzolan material/lime | 0.7 - 1.3 |
| cement/lime | 0.6 - 0.8 |
| waste/total mixture | ≤ 0.5 |
| (waste + pozzolan material)/total mixture | ≤ 0.56 |

2. Process according to claim 1, further comprising the step of processing the gas which evolves during said mixing operations by means of a gas scrubbing or purifying system.

3. Process according to claim 2, wherein said gas scrubbing or purifying system comprises a closed cycle absorption equipment wherein said gas is contacted with a diluted solution of sulphuric acid.

4. Process according to claim 3, wherein said gas scrubbing or purifying system further comprises activated carbon filters.

5. Process according to claim 2, wherein said gas scrubbing or purifying system comprises a flare unit, by means of which said gas is eliminated by combustion.

6. Process according to any one of claims 1-5, wherein said one or more natural of artificial pozzolan materials are selected from the group consisting of natural pozzolans and fly ash from the combustion of coal.

7. Process according to any one of claims 1-6, wherein said cement is selected from portland cement, portland-pozzolan cement and mixtures thereof.

## Patentansprüche

1. Verfahren zum Stabilisieren und Verfestigen von Abfällen aus der Aluminiumverarbeitung mittels einer anorganischen Matrix, worin die vorgenannten Abfällen mit Wasser, Kalk und einem oder mehreren natürlichen oder künstlichen Puzzolanerdematerialen und Zement im folgenden Verhältnis gemischt werden:
| | |
|---|---|
| Wasser/Total-Feststoffe (ausschliesslich Abfälle) | 0,8-1,0 |
| Puzzolanerde/Kalk | 0,7-1,3 |
| Zement/Kalk | 0,6-0,8 |
| Abfälle/Total- Gemisch | ≤ 0,5 |
| (Abfälle + Puzzolanerde) / Total- Gemisch | ≤ 0,56 |

2. Verfahren nach Anspruch 1, worin ausserdem ein Verfahrensschritt zur Verarbeitung des Gases vermittels eines Systems zum Waschen oder Reinigen des Gases vorgesehen ist, wobei sich das Gas während der Vermischungsvorgäng entwickelt hat.

3. Verfahren nach Anspruch 2, worin das vorgenannte System zum Waschen oder Reinigen des Gases eine Einrichtung zur Absorption im geschlossenen Kreislauf enthält, in der das vorgenannte Gas in Berührung mit einer verdünnten Schwefelsäurelösung gebracht wird.

4. Verfahren nach Anspruch 3, worin das vorgenannte System zum Waschen oder Reinigen der Gases ausserdem mit Aktivkohlefiltern versehen ist.

5. Verfahren nach Anspruch 2, worin das vorgenannte System zum Waschen oder Reinigen des Gases eine Fackelbrenner Einheit enthält, durch welche das vorgenannte Gas durch Verbrennen abgezogen wird.

6. Verfahren nach je einem der Anspüche 1 bis 5, worin das vorgenannte ein oder mehrere natürliche oder künstliche Puzzolanerdemateriale von der aus natürlichen Puzzolanerden und Flugasche aus Verbrennung von Kohle bestehenden Gruppe ausgewählt wird.

7. Verfahren nach je einem der Ansprüche 1 bis 6, worin das vorgenannte Zement aus Portlandzement, Portland-Puzzolanerdezement und deren Mischungen ausgewählt wird.

## Revendications

1. Procédé pour stabiliser et solidifier des déchets provenant du traitement d'aluminium au moyen d'une matrice inorganique, comprenant le brassage desdits déchets avec l'eau, la chaux, un ou plusieurs matériels pouzzolaniques naturels ou artificiels et ciment, avec les suivants rapports en poids:
| | |
|---|---|
| eau/total solides (déchets exclus) | 0,8 - 1,0 |
| matériel pouzzolanique/chaux | 0,7 - 1,3 |
| ciment/chaux | 0,6 - 0,8 |
| déchets/mélange total | ≤ 0,5 |
| (déchets + matériel pouzzolanique) / mélange total | ≤ 0,56 |

2. Procédé selon la revendication 1, comprenant en outre une phase de traitement du gaz qui se développe pendant lesdites operations de brassage, au moyen d'un système de lavage ou épuration du gaz.

3. Procédé selon la revendication 2, dans lequel ledit système de lavage ou épuration comprend une installation d'absorption à cycle fermé, dans laquelle ledit gaz est mis en contact avec une solution diluée d'acide sulfurique.

4. Procédé selon la revendication 3, dans lequel ledit système de lavage ou épuration comprend en outre des filtres à charbon actif.

5. Procédé selon la revendication 2, dans lequel ledit système de lavage ou épuration comprend une unité de chalumeau, au moyen de laquelle ledit gaz est éliminé par combustion.

6. Procédé selon une quelconque des revendications 1 à 5, dans lequel lesdits un ou plusieurs matériels pouzzolaniques sont choisis du group consistant des pouzzolanes naturelles et de la cendre volante provenant de la combustion du charbon.

7. Procédé selon une quelconque des revendications 1 à 6, dans lequel ledit ciment est choisi entre ciment Portland, ciment Portland-pouzzolanique et leur mélanges.
